Europäisches Patentamt

European Patent Office

Office européen des brevets

(11) Publication number : **0 448 501 A1**

# EUROPEAN PATENT APPLICATION

(21) Application number : **91500027.7**

(22) Date of filing : **12.03.91**

(51) Int. Cl.⁵ : **F23Q 7/00, B60N 3/14, B60Q 3/02**

(30) Priority : **12.03.90 ES 9000731**

(43) Date of publication of application :
**25.09.91 Bulletin 91/39**

(84) Designated Contracting States :
**DE ES FR GB IT**

(71) Applicant : **SUELEC-AUTO, S.A.**
**Jacint Verdaguer, s/n.**
**E-08970 Sant Joan Despi (ES)**

(72) Inventor : **Riba Montesinos, Jordi**
**Frigols 27**
**E-08028 Barcelona (ES)**

(74) Representative : **Ferregüela Colon, Eduardo**
**Agricultura, 99**
**E-08019 Barcelona (ES)**

(54) **Luminous ring for cigar lighters in automotive vehicles.**

(57) This invention relates to a luminous ring (1) for cigar lighters in automobile vehicles, of the kind formed by a translucent bushing which covers the cigar holder to be illuminated, being finished off by a rim (4) for one of its ends, and illuminating means wherein the emitted beams are transmitted through the ring (1) to the rim (4). The rim (4) in accordance to the present invention has a projection (7) upon which a rim (4) emerges outwardly and an upper extension(8) emerges perpendicularly to the rim (4) wherein an opaque one-piece lighting supply (16) is inserted through outlets and inlets which are provided in the rim (4) in the extension (8) and in the projection (7).

FIG.-11
E-F

EP 0 448 501 A1

## LUMINOUS RING FOR CIGAR LIGHTERS IN AUTOMOTIVE VEHICLES

This invention relates to a luminous ring for cigar lighters in automotive vehicles.

This invention relates more particularly to lighting systems of the cigar lighters installed in an opening of a panel such as dashboards of automotive vehicles, so that they may be localized in weak luminous conditions.

Typically, automobile dashboards in current use has complementary instruments with inner devices which are usually provided with soft glow or 'halo' luminous means in order to help its location in weak or null luminous conditions. In this view, lighting systems are joined to these panels, that in most cases go over perimetraly. So, said panels or said complements in the dashboard are able to be seen and easily localized in weak or null luminous conditions.

Particularly, generally cylindrical-shaped luminous rings are joined in the cigar lighters in current use, having attached lighting supplies in their rears so that said luminous rings may be clearly localizable for its perimeter once installed into the dashboards.

Several embodiments of these functions are known, such as those disclosed in the German Patents DE-PS 2535080 and DE-PS 2254712, US Patents 2,701,297 and 4,713,733, or the European Patent 0268861.

All the luminous systems indicated above shown in common the following characteristics:

a) a transparent ring which covers the lighter holder,

b) a rim that finishes off the said ring from the end to be placed in the dashboard,

c) relieves on the said rim in its inner surface to increase the luminous coefficient of the said ring on the dashboard,

d) an upper extension of the said transparent ring in its inner end opposite to the said rim,

e) fastening means of a lamp-holder upon the said extension,

f) a lamp-holder provided with a bushing wherein it is placed a lamp with its corresponding spring fingers, one of them making earth on the lighter holder through a emergent tab of the lamp-holder itself,

g) inner relieves in the said transparent ring to lead the said lighter holder once placed said ring in the dashboard, and,

h) outer tabs placed onto the said ring close to the rim, in order to fit said ring on the dashboard.

The luminous ring for cigar lighters in accordance with the present invention shows advantages with regard to the known types, among which may be mentioned the number of part of which it is constituted.

The luminous ring in accordance with the present invention is provided with an inwardly extending projection from which an upper extension perpendicularly emerges parallel to the rim that finishes off to the end placed in the dashboard, wherein in the upper extension an opaque one-piece lighting supply may be inserted through the engagement of inlets and outlets which are provided in the extension and projection, and in the one-piece lighting supply.

The said opaque one-piece lighting supply, generally long-shaped, has in both ends two opposite openings wherein a lamp and one of the two spring fingers may be placed at the end to be fixed to the ring and the other spring finger, which is needed for the running of the said lighting means, may be placed at the other free end of the supply.

The present invention is following disclosed with reference to the accompanying drawings wherein are illustrated a practical embodiment of a luminous ring for cigar lighters. It is to be expressly understood, however, that the drawings are for the purpose of illustration only, and are not designed as a definition of the limits of this invention.

In the drawings:

FIGURE 1 is a top plan view of the ring,

FIGURE 2 is a side elevation view of the ring,

FIGURE 3 is a left end elevation view of the ring,

FIGURE 4 is a side elevation in longitudinal section of the ring,

FIGURE 5 is a left end elevation view of the lamp-holder,

FIGURE 6 is a top plan view of the lamp-holder,

FIGURE 7 is a side elevation view of the lamp-holder,

FIGURE 8 is a right end elevation view of the lamp-holder,

FIGURE 9 is a side elevation in longitudinal section of the lamp-holder,

FIGURE 10 shows in perspective the ring and lamp-holder set when assembled,

FIGURE 11 is a longitudinal section of the ring and lamp-holder when assembled. The section is taken from the line E-F of Figure 10, and,

FIGURE 12 is a view in axial section of the joint between the lamp-holder and the ring when assembled. The section is taken from the line G-H of the Figure 11.

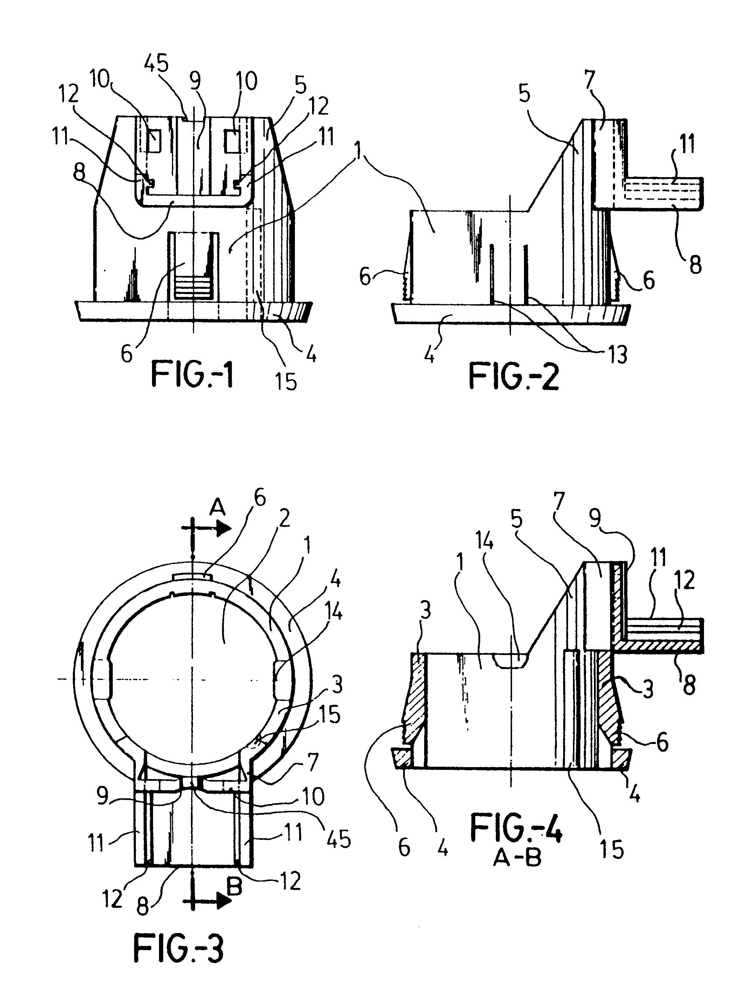

In the figures 1, 2, 3 and 4 is shown a ring (1) in accordance with the present invention having a circular section, which must be made of translucent plastic material. The said ring (1) has a central opening (2) and a wall (3), wherein in one of its ends comprises a rim (4), and in the other end has an extension (5), being planned tabs (6) in a number of two or more for its fastening in the dashboard of an automotive vehicle.

The ring (1) in accordance with the present invention has an inwardly extending projection (7), of which an upper extension (8) perpendicularly emerges parallel to the rim (4).

The projection (7) has in its outer surface a central hollow (9), and holes (10) in number of two or more, which their use will be disclosed later.

The upper extension (8) comprises prolongations (11) in its side ends, having inwardly placed relieves (12) in all its ends which their use will be disclosed later.

Likewise, The ring (1) comprises relieves (13) in its outer surface to cooperate with the tabs (6) when the set is mounted into the dashboard, and so avoid with them further movements once installed, as well as adjust any difference between the diameter of the hole made into the dashboard and the ring's itself(1).

The ring (1) inwardly comprises small outlets to fix the engagement between the ring itself (1) and the lighter holder (2) to be placed in its interior in the same manner as disclose in the paragraph above.

The ring (1) has a groove (15) in its inner surface of the wall (3) to lead and to position the lighter holder (2) into it.

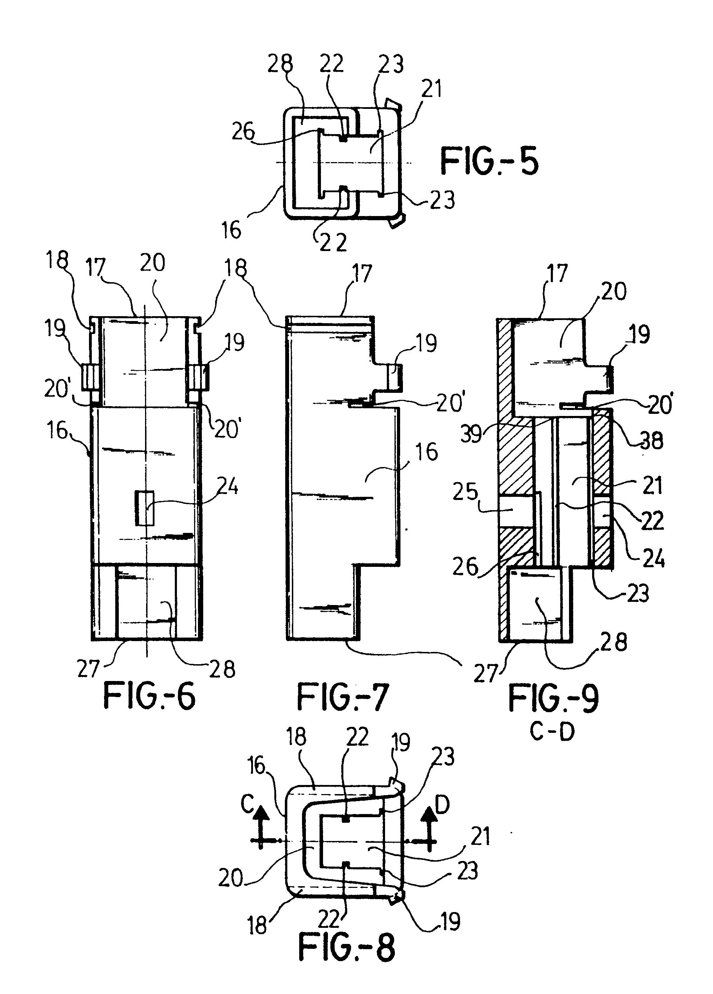

The figures 5, 6, 7, 8 and 9 show the one-piece lamp-holder (16), being made of an opaque insulating plastic material or similar.

The lamp-holder (16) as shown is generally long-shaped and has parallelepiped section, having closed its central part and opened both ends.

The end (17), frontally shown in the Figure 8, comprises two grooves (18) placed in two non-contiguous sides, as shown in figures 8, 6 and 7, covering longitudinally all its outer surface. The same both surfaces provided with the grooves (18) comprise projections that constitute two nailed-shaped extensions (19), which their use will be disclosed later. Likewise are planned two cuts (20) placed close to the nailed-shaped extensions (19) to give them flexibility. All these elements form a cavity (20) in the end (17) of the lamp-holder (16).

The lamp-holder (16) in its inner central part shows a cavity (21) that goes through all its longitude, with an outlet (22) and an inlet (23), as well as two holes (24) and (25) set against each other, and another groove (26) in its bottom end opposite to the aforementioned end (17). The purpose of those several outlets and inlets will be disclosed later.

The lamp-holder (16) in its underneath end (27), frontally shown in the figure 5, limits a cavity (28) which is closed for three consecutive walls, and finish semiopen for its fourth side, and for its lower outer part.

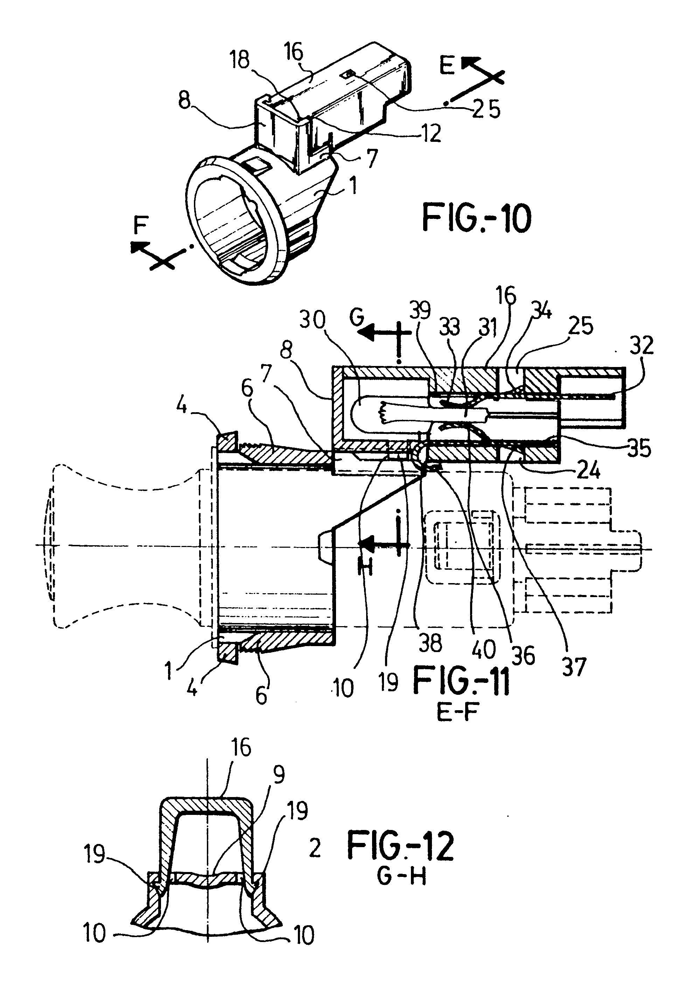

In the figure 11 is shown in section the ring (1) and lamp-holder (16) set when attached with its corresponding lamp and electric spring fingers, and schematically shown an electric lighter provided with its holder, the full set in longitudinal section.

The ring (1) is capable of holding the lamp-holder (16) in its upper part, over its extension (8), being fitted like a guiding through the planned relieves (12) in the lateral ends (11) of the ring (1) against the grooves (18) comprised in the end (17) of the lamp-holder (16).

In order to provide the aforementioned engagement, the holes (10) of the ring (1) are capable of holding the nailed-shaped extensions (19), wherein the outlets and inlets are linked through a slightly pressure of the lamp-holder (16) over the ring (1).

The lamp-holder (16) comprises in its interior the lamp (30), which in its end (31) has the electric spring fingers which are needed for its running. The necessary energy is supply through two metallic sheets (23) and (35), as shown in figure 11.

The metallic sheet (32) has a first protuberance (33) which makes contact with the end (31) of the lamp (30), whereas has a second protuberance (34) inverse to the first one placed in such a way that once sited the sheet (32) into the groove (26) of the lamp-holder (16) the said second protuberance (34) is jammed in the interior of the hole (25) of the lamp-holder itself, with the purpose of that a connector may be fitted in the end of the sheet (34) every time needed without having to take out the sheet (32) of the interior of the lamp-holder (16).

In the same way disclosed in the paragraph above, the sheet (35) acts inferiorly, having for this purpose a first protuberance (36) which makes contact inferiorly with the end (31) of the lamp (30), and having also a second protuberance (37) inverse to the first one placed in such a way that once fitted the sheet (35) into the groove (23) of the lamp-holder (16) the said second protuberance (37) is jammed in the interior of the hole (24) of the lamp-holder itself, therefore avoiding any further movement in its interior when installed.

Both metallic sheets (32) and (35) are jammed for the end (17) of the lamp-holder, having been planned stops (38) and (39) in the grooves (23) and (26) near to the cavity (20).

The metallic sheet (35) is centrally prolonged for the end near to the cavity (20) of the lamp-holder (16), establishing a curved platen (40) to received contact with the outer surface of the lighter holder through the hollow (45) of the ring (1).

The necessary energy for the running of the lamp (30) is received through the metallic sheets (35) and (32), and respectively in its turn, through a connector in the end of the metallic sheet (32), not being shown in the drawings for being conventional, and thanks to the permanent contact of the curved platen (40) of the metallic sheet (35) over the holder of the electric lighter.

Figure 10 shown in perspective the disclosed ring (1) and the lamp-holder (16) set when attached, and ready to received the holder of the lighter and the lighter to be light.

Figure 12 is a transversal section in detail of the engagement between the lamp-holder (16) and the ring (1) being shown the nailed-shaped extensions (19) of the lamp-holder (16), and the holes (12) of the ring (1).

It has been disclosed above that the ring (1) has in its inner surface a hollow (9). Its function is to assist increasing the ring (1) surface wherein is received the light emitted by the lamp (30), in order to increase its incidence over the translucent set of the material which has to lead it.

The disclosed ring, essentially, may be modify in its accidental characteristics, without this involving any variation in the protection sought by this patent application, whenever the spirits of the claims are conserved.

## Claims

1. luminous ring for cigar lighters in automotive vehicles, of the type formed by a transparent bushing which holds the lighter holder to be lighted finished up by a rim for one of its ends, and luminous means in which the beams emitted are transmitted through the ring to the rim, characterised in that the ring has an inwardly extending projection, over which an upper extension perpendicularly emerges from its outer part parallel to the rim, wherein an opaque one-piece lighting supply is insertable through the engagement of respective outlets and inlets planned in it and in that extension and projection.

2. Luminous ring for cigar lighters in automotive vehicles, as claimed in claim 1, characterized in that the opaque one-piece lighting supply is long shaped, having two opposite openings, wherein the lighting means and one of the two spring fingers are placed to the end to be inserted upon the ring and the other spring finger, which is needed for the running of the said lighting means, is inserted in the other free end of the one-piece lighting supply.

FIG.-1

FIG.-2

FIG.-3

FIG.-4
A-B

FIG.-5

FIG.-6

FIG.-7

FIG.-9
C-D

FIG.-8

FIG.-10

FIG.-11
E-F

FIG.-12
G-H

**European Patent Office**

## EUROPEAN SEARCH REPORT

Application Number

EP 91 50 0027

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,D | FR-A-2 320 211 (SCHOELLER & CO.)<br>* Claim 1; figure 1 * | 1 | F 23 Q 7/00<br>B 60 N 3/14<br>B 60 Q 3/02 |
| A | | 2 | |
| A | FR-A-2 572 035 (SIGNAL VISION S.A.)<br>* Figure 2; claim 1 * | 1,2 | |
| A | US-A-4 899 263 (LUPOLI et al.)<br>* Figure 1; figure 2; claims 1,4,6 * | 2 | |
| A | FR-A-2 169 587 (SCHOELLER & CO.)<br>* Figures 1,12; claims 1,16,17 * | 1,2 | |

TECHNICAL FIELDS SEARCHED (Int. Cl.5)

B 60 N
B 60 Q
F 23 Q
F 21 V

The present search report has been drawn up for all claims

| Place of search | Date of completion of the search | Examiner |
|---|---|---|
| THE HAGUE | 05-06-1991 | DE MAS A.G. |

EPO FORM 1503 03.82 (P0401)